# EUROPEAN PATENT SPECIFICATION

(11) **EP 1 323 320 B1**
(45) Date of publication and mention of the grant of the patent: **08.06.2005**
(21) Application number: 01967388.8
(22) Date of filing: 14.09.2001
(51) Int. Cl.: H04Q 7/22, G08B 25/10

(54) **ACKNOWLEDGEMENT SERVICE**
BESTÄTIGUNGSDIENST
SERVICE D'ACCUSE DE RECEPTION

(30) Priority: 18.09.2000 FI 20002058
(43) Date of publication of application: 02.07.2003
(73) Proprietor: Sonera Zed Oy, FIN-00510 Helsinki (FI)
(72) Inventor: LINDQVIST, Anssi, FIN-00610 Helsinki (FI); LEINO, Kirsti, FIN-02130 Espoo (FI); MALINEN, Kyösti, FIN-40800 Vaajakoski (FI)
(74) Representative: Simmelvuo, Markku
(86) International application number: PCT/FI2001/000802
(87) International publication number: WO 2002/023929

(56) References cited:
- WO-A1-96/13814
- WO-A1-98/16412
- WO-A2-99/65256
- DE-A- 4 445 180
- US-A- 5 721 550

## Description

### FIELD OF THE INVENTION

The invention relates to telecommunication. In particular, the invention relates to a new and advanced method and system for providing an acknowledgement service to subscribers of a switched telephone network.

### BACKGROUND OF THE INVENTION

The ensuring of safety and welfare of relatives and friends is one of the basic needs of a human being, especially when people close to you are, for one reason or another, out of sight or earshot. To meet this need, different systems have been developed. There are e.g. different security systems. There are e.g. different security systems in which the person being looked after, such as e.g. a child, carries a radio transmitter by means of which e.g. parents are able to monitor the child's movements.

For example, publication US 5,652,570 discloses an interactive locator and monitoring system of an individual in which the person being monitored carries a specific transmitter which, among other things, collects medical data (e.g. pulse) on the person carrying it and sends the data in question together with the location data to the central monitoring system.

PCT publication WO 00/23956 presents a personal security system in which one carries a radio transmitter alarm. In an emergency, the person activates the alarm, in which case the base stations included in the system receive the sent alarm signal, and the location of the person may be determined, among other things, based on the signal strengths received by different base stations.

Further, known are different security systems in which e.g. a guard of a museum or the like acknowledges the check points at predetermined time intervals using his/her card.

The problem with the prior-art solutions is that in those the user is required to obtain a separate, dedicated transmitter/alarm. Furthermore, in known systems, the user has to separately send the alarm himself/herself. However, in the event of an illness attack, for example, this is not reasonable.

In the following section, the known technique utilized by the invention will be further briefly presented.

The use of the wireless application protocol (WAP, Wireless Application Protocol) is becoming common in solutions in which a connection is needed between portable terminal devices such as mobile stations and Internet applications, e.g. electronic mail, WWW (World Wide Web), newsgroups. The wireless application protocol provides an architecture which adapts mobile phones, browser programs of mobile phones, and the WWW to work as a functional entity. When transmitting information to mobile stations the HTML language (Hyper Text Mark-up Language) used in the WWW is translated into a WML (Wireless Mark-up Language) designed for the wireless environment. At present, as the description language of the WAP standard, the WML language is used, but the language may be understood to mean also any other description language consistent with the future WAP standard. The wireless application protocol comprises of the following five layers: wireless application environment (WAE, Wireless Application Environment), wireless session layer (WSL, Wireless Session Layer), wireless transaction layer (WTP, Wireless Transaction Layer), wireless transport layer security (WTLS, Wireless Transport Layer Security), and wireless datagram layer (WDP, Wireless Datagram Layer). The wireless application environment is used to mean e.g. a WTA (WTA, Wireless Telephone Application), or some other suitable environment. Lowermost is yet a system-dependant layer which defines the transfer mode of the information inside the system in question. The specification currently accepted is the WAP specification 1.1. The aforementioned specification and other WAP-related specifications are available at the Internet address www.wapforum.com.

An Interactive Voice Response (APJ) is used to mean a data-entry system implemented in a switched telephone network in which the user calls a predetermined service number, after which the alternatives available for choice are listed from a recording tape, and the user selects the desired alternative by pressing a button corresponding to the selected alternative on his/her terminal device equipped with dual-tone multifrequency dialing, such as e.g. a mobile station. The APJ is also called an Interactive Voice Response (IVR).

Short messages (Short Message Service, SMS) are text messages used in the GSM mobile system. In specification GSM 03.38 of the European Telecommunications Standards Institute ETSI (http://www.etsi.org), short messages are divided into four different classes (Class 0 - Class 3). Characteristic of the class 0-type short messages, i.e. of so-called FLASH text messages, is that they are received directly onto the display of a mobile station and are not saved to the SIM card (Subscriber Identity Module, SIM) of the mobile station.

WO 9816412 relates to utilization of an SMS-transmitter as car alarm. When physical damage is made to a car, the SMS-transmitter transmits a preprogrammed message to a central server for SMS-alarm. However, the solution suggested by WO 9816412 has a drawback as it requires interactive input from the subscriber being monitored.

DE 4445180 discloses another alarm system for vehicles, which takes advantage of the telecommunications network. According to the invention, the alarm system is turned on by sending a short message from the MS to the server. The server finds out the location of the MS and thus the location of the vehicle and the location information is stored in the server. The server makes a connection to the MS and waits for the status information from the MS. If the status is not received in time, the server gives an alarm. If the status is received the server requests the location of the MS again and compares the new location information to the location information stored to the server. If these are not the same, it means that the vehicle has moved and the server gives again an alarm.

### OBJECTIVE OF THE INVENTION

The objective of the present invention is to disclose a new type of method and system which eliminate the drawbacks referred to above, or at least significantly alleviate them. One specific objective of the invention is to disclose a method and system which enable one to provide an acknowledgement service to subscribers of a switched telephone network.

### BRIEF DESCRIPTION OF THE INVENTION

In the present invention, subscribers of a switched telephone network are offered an acknowledgement service, in which acknowledgement service the terminal device and/or monitoring system of at least one first subscriber is used to monitor the acknowledgements sent by at least one second subscriber from his/her terminal device.

According to the present invention, a connection is established with an acknowledgment server arranged in conjunction with the aforementioned telephone network. The aforementioned acknowledgement server is sent one or more acknowledgment parameters that comprise preferably the subscriber number of at least one second subscriber as well as one or more points of time of acknowledgement, after which the acknowledgement service arranged on the acknowledgment server is activated. Advantageously, a connection is established with the acknowledgement server, and the aforementioned acknowledgement parameters are sent to it by the first subscriber. From the acknowledgement server, an acknowledgement request is sent to the terminal device of at least one second subscriber at each point of time of acknowledgement defined by the acknowledgement parameters. At least one second subscriber either responds to the acknowledgement request by sending an acknowledgment from his/her terminal device to the acknowledgement server, or leaves the request unanswered. From the acknowledgement server, an acknowledgement message is sent to the terminal device of at least one first subscriber, if at least one second subscriber responds to the acknowledgement request. If, in turn, at least one second subscriber does not respond to the acknowledgement request, then from the acknowledgement server, an alarm is sent to the terminal device of at least one first subscriber. Finally, the alarm service is deactivated. It is important to note that the acknowledgement service is used to mean a functional entity. In other words, with the term "acknowledgement server" no stand is taken on the physical implementation. This way, the functions included in the acknowledgement server may be implemented either e.g. on one computer, or the functions in question may be distributed on several computers and/or components of the telephone network communicating with one another. Further, the aforementioned functions may be implemented on a software or hardware basis. Furthermore, the term "at least one first subscriber" is used to mean either the subscriber who has arranged the monitoring, or such a subscriber to whom the alarms are transmitted, who thus is somebody else than the person that arranged the monitoring. Hence, if required/desired the alarm is given to more than just one terminal device. Furthermore, the term "at least one second subscriber" means at least one person being monitored. Further, the monitoring system means e.g. some information system which monitors alarms advantageously and automatically.

In one embodiment of the invention, from the acknowledgement server, a confirmation request is sent to the terminal device of at least one second subscriber prior to sending the first acknowledgement request. In response to the acknowledgement request in question, the at least one second subscriber concerned sends a confirmation from his/her terminal device to the acknowledgement server. Only after this, the acknowledgement service is activated. Alternatively, the at least one second subscriber concerned sends a rejection or leaves the confirmation request unanswered. In that case, the acknowledgement service is not activated.

In one embodiment of the invention, the aforementioned acknowledgement request is sent to the terminal device of the at least one second subscriber concerned a predetermined number of times at predetermined time intervals, until either the at least one second subscriber concerned responds, or a predetermined response time expires.

In one embodiment of the invention, instead of the terminal device of the second subscriber, the aforementioned acknowledgement requests are sent to the terminal device and/or monitoring system of the at least one first subscriber; the at least one first subscriber and/or monitoring system concerned responds, or leaves the aforementioned acknowledgement requests unanswered instead of the second subscriber, and the aforementioned alarm is sent to the terminal device of a predetermined third subscriber instead of the terminal device of the first subscriber.

In one embodiment of the invention, a connection is initiated with the acknowledgement server and it is sent the aforementioned acknowledgement parameters by means of a WWW user interface. In that case, the system in accordance with the invention comprises e.g. a computer of at least one first subscriber that is used to initiate a connection with the acknowledgement server and send the acknowledgement parameters to it, as well as a WWW server for transmitting the acknowledgement parameters to the acknowledgement server, the WWW server being arranged in conjunction with the acknowledgement server and the computer of the first subscriber. It is important to note that the term "server" is again used to mean a functional entity, and with it no stand is taken on the physical implementation. Hence, the functions included in the WWW server may be implemented either e.g. on a standalone computer, or the functions in question may be distributed on several computers communicating with one another. In the same way, the functions included in the WWW server and acknowledgement server may be implemented on the one and the same computer. Further, the functions of the WWW server may be implemented on a software and/or hardware basis.

In one embodiment of the invention, a connection is initiated with the acknowledgement server, and it is sent the aforementioned acknowledgement parameters by means of a WAP user interface. In that case, the system in accordance with the invention comprises e.g. a terminal device of at least one first subscriber that is a digital mobile station provided with WAP facilities, and a WAP gateway for transmitting the acknowledgement parameters to the acknowledgement server, the WAP gateway being arranged in conjunction with the acknowledgement server and the terminal device of the first subscriber.

In one embodiment of the invention, a connection is initiated with the acknowledgment server and it is sent the aforementioned acknowledgement parameters by means of an APJ user interface. In that case, the system in accordance with the invention comprises a terminal device of at least one first subscriber that is equipped with dual-tone multifrequency dialing, as well as an APJ service for transmitting the acknowledgement parameters to the acknowledgement server, the APJ service being arranged in conjunction with the acknowledgement server and the terminal device of the first subscriber.

In one embodiment of the invention, the aforementioned acknowledgement requests, responses to the acknowledgement requests, acknowledgement messages, alarms, confirmation requests and/or confirmations are sent as short messages.

In one embodiment of the invention, the acknowledgement requests are sent as class 0-type short messages.

In one embodiment of the invention, the aforementioned acknowledgement requests, responses to the acknowledgement requests, acknowledgement messages, alarms, confirmation requests and/or confirmations are sent using the APJ.

In one embodiment of the invention, the acknowledgement request comprises a predetermined standard part and a subscriber part being determined by the subscriber.

The advantage of the present invention over prior art is that it enables one to provide subscribers of a telephone network with an easy-to-use service by means of which the subscriber may monitor a second subscriber by following with his/her terminal device the acknowledgements sent by the second subscriber. The users of the present invention do not need separate devices, instead regular terminal devices of a switched telephone network, such as e.g. mobile stations, suffice. Hence, the solution in accordance with the present invention is cost-effective from the standpoint of the end user. The solution in accordance with the present invention is, in addition, flexible due to the portability of the mobile station functioning as the terminal device. Furthermore, the solution in accordance with the invention does not require that the person being monitored should send a separate alarm, instead the alarm is sent automatically, if the person in question has not acknowledged within a predetermined period of time. Hence, the solution in accordance with the present invention is very safe e.g. in the event of an accident or an illness attack.

### BRIEF DESCRIPTION OF THE DRAWINGS

In the following section, the invention will be described by the aid of the accompanying examples of its embodiments with reference to the accompanying drawing, in which
Fig. 1 schematically represents one system in accordance with the invention,
Fig. 2 schematically represents one system in accordance with the invention,
Fig. 3 schematically represents one system in accordance with the invention,
Fig. 4 schematically represents one system in accordance with the invention,
Fig. 5 schematically represents one system in accordance with the invention, and
Fig. 6 schematically represents one system in accordance with the invention.

### DETAILED DESCRIPTION OF THE INVENTION

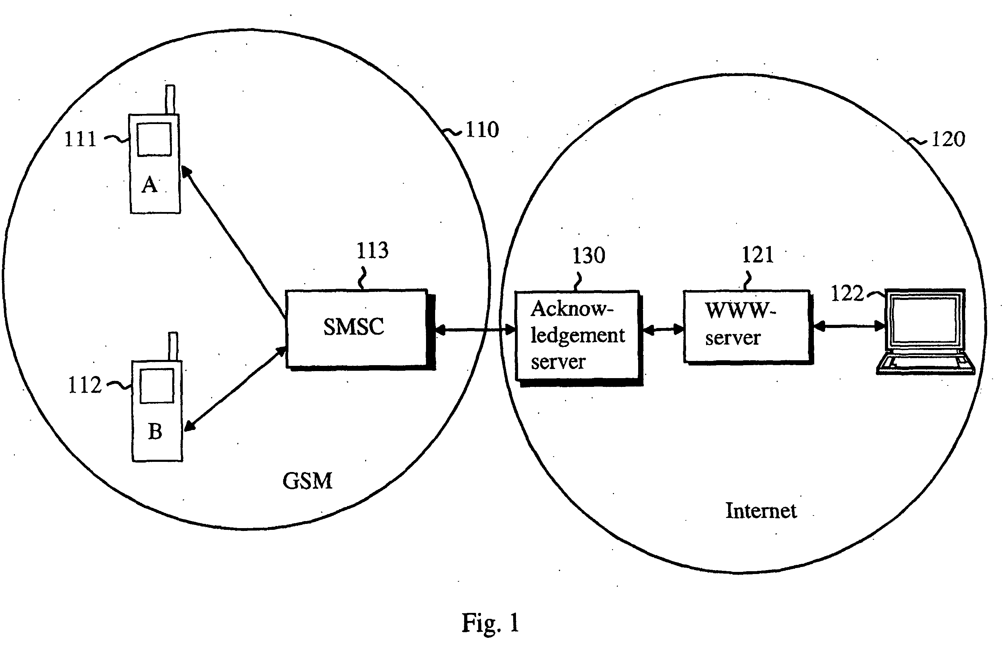

Fig. 1 is a block diagram illustrating, by way of example, the components of one system in accordance with the invention. The system comprises a switched telephone network 110, which in the example of Fig. 1 is a digital mobile network. Arranged in the telephone network in question is a short message services center 113, as well as a terminal device 111 of the first subscriber and a terminal device 112 of the second subscriber. The terminal devices in question are in the example of the figure mobile stations provided with short message features. According to the invention, the system comprises an acknowledgement server 130. Furthermore, according to the invention, the system comprises a user interface by means of which the first subscriber initiates a connection with the acknowledgement server. In the example of Fig. 1, the user interface comprises a computer 122 of the first subscriber and a WWW server 121, which communicate with the acknowledgement server 130 over an Internet network 120.

The first subscriber initiates a connection from his/her computer 122 to the WWW server 121, on which there are arranged WWW sites that comprise a form into which a set of acknowledgement parameters are entered that comprise the subscriber number of the second subscriber, as well as one or more points of time of acknowledgement. In the example there is only one subscriber being monitored (the second subscriber), but naturally there may be more than one of them. Each acknowledgement request may be set as a single-use one or a repeated one, e.g. every day at the same time. As regards the content, the acknowledgement request is divided into a standard message and a part being determined by the first subscriber. The standard message is e.g. of the form "Acknowledgement message: call 16743 or send ok to the number 615". The first subscriber may, at some later point, change the values of the acknowledgement parameters. The acknowledgement parameters are transmitted to the acknowledgement server. It is important to note that although in Fig. 1, the acknowledgement server and the WWW server have been presented as separate entities, their functions may also be integrated. Further, the functions of the acknowledgement server may be alternatively distributed on several units physically separate.

Next, from the acknowledgement server 130, a confirmation request is sent to the terminal device 112 of the second subscriber prior to sending the first acknowledgement request. In the example of Fig. 1, a short message is received onto the mobile station 112 of the second subscriber via the short message service center 113, the content of which is e.g. of the form: "Are you willing to accept an acknowledgement service with the number 040xxxxxx ? Call 16743 or send ok to the number 615 to inform about your consent". In response to the confirmation request concerned, the subscriber sends a confirmation from his/her terminal device 112 to the acknowledgement server 130 via the short message service center 113. Only after this, the acknowledgement service is activated. Alternatively, the second subscriber sends a rejection or leaves the confirmation request unanswered. In that case, the acknowledgement service is not activated.

Next, the acknowledgement service arranged on the acknowledgement server 130 is activated. From the acknowledgement server 130, an acknowledgement request is sent to the terminal device 112 of the second subscriber at each point of time of acknowledgement. In the example of Fig. 1, the acknowledgement request is a class 0-type short message the advantage of which is that it is not saved to the SIM card of the mobile station 112. If there are acknowledgement requests received e.g. every fifteen minutes, ordinary short messages would very soon occupy the memory locations of the SIM card. In the example of Fig. 1, the second subscriber responds to the acknowledgement request by sending a short message to a predetermined number 615. In case the second subscriber does not react to the acknowledgement request sent to him, a new acknowledgement request is sent to his/her terminal device 112, e.g. after three minutes have lapsed from the first one. Altogether there are five acknowledgement requests sent in fifteen minutes. If the second subscriber during this period does not respond to the acknowledgement request, then from the acknowledgement server 130, an alarm is sent to the terminal device 111 of the first subscriber, which in the example of Fig. 1 is a short message the content of which is e.g. of the form: "No acknowledgement received - 040xxxxxx". If the second subscriber responds to the acknowledgment request, then from the acknowledgement server 130, an acknowledgement message is sent to the terminal device 111 of the first subscriber, which in the example of Fig. 1 is a short message the content of which is e.g. of the form "Acknowledgement received - 040xxxxxx". When one has gone through all the determined points of time of acknowledgement, the service is finished.

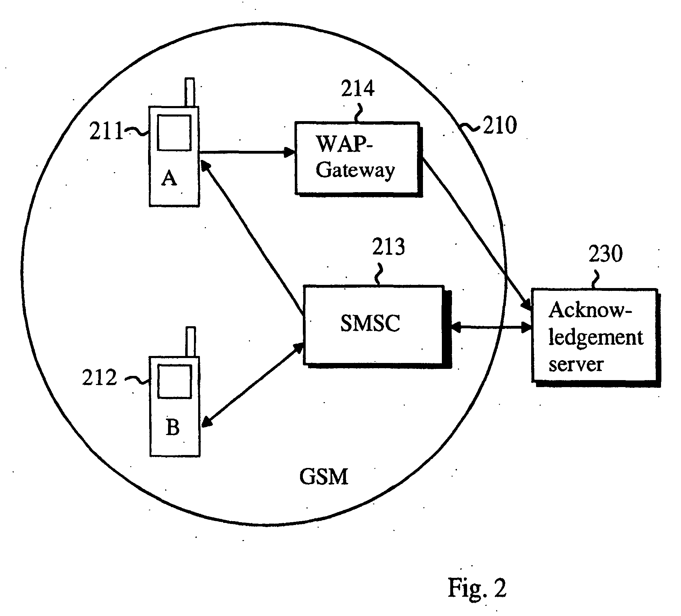

Fig. 2 is a block diagram illustrating, by way of example, the components of one system in accordance with the invention. The system comprises a switched telephone network 210, which in the example of Fig. 2 is a digital mobile network. Arranged in the telephone network in question is a short message service center 213, as well as a terminal device 211 of the first subscriber and a terminal device 212 of the second subscriber. The terminal devices in question are in the example of Fig. 2 mobile stations provided with short message features. According to the invention, the system comprises an acknowledgement server 230. Further, according to the invention, the system comprises a user interface by means of which the first subscriber may initiate a connection with the acknowledgement server. In the example of Fig. 2, the user interface comprises the terminal device 211 of the first subscriber that is provided with WAP facilities, as well as a WAP gateway 214, which are communicating with the acknowledgement server 230 via the mobile network 210.

The first subscriber initiates a connection from his/her mobile station 211 via the WAP gateway 214 to the acknowledgement server onto which a set of acknowledgement parameters are entered that comprise the subscriber number of the second subscriber, as well as one or more points of time of acknowledgement. In the example there is only one subscriber being monitored (the second subscriber), but naturally there may be more than one of them. Each acknowledgement request may be set as a single-use one or a repeated one, e.g. every day at the same time. As regards the content, the acknowledgement request is divided into a standard message and a part being determined by the first subscriber. The standard message is e.g. of the form "Acknowledgement message: call 16743 or send ok to the number 615". The first subscriber may, at some later point, change the values of the acknowledgement parameters. The acknowledgement parameters are transmitted to the acknowledgement server. It is important to note that although in Fig. 2, the acknowledgement server has been presented as a whole entity, its functions may be alternatively distributed on several units physically separate.

Next, from the acknowledgement server 230, a confirmation request is sent to the terminal device 212 of the second subscriber prior to sending the first acknowledgement request. In the example of Fig. 2, a short message is received onto the mobile station 212 of the second subscriber via the short message service center 213, the content of which is e.g. of the form: "Are you willing to accept an acknowledgement service with the number 040xxxxxx ? Call 16743 or send ok to the number 615 to inform about your consent". In response to the confirmation request concerned, the subscriber sends a confirmation from his/her terminal device 212 to the acknowledgement server 230 via the short message service center 213. Only after this, the acknowledgement service is activated. Alternatively, the second subscriber sends a rejection or leaves the confirmation request unanswered. In that case, the acknowledgement service is not activated.

Next, the acknowledgement service arranged on the acknowledgement server 230 is activated. From the acknowledgement server 230, an acknowledgement request is sent to the terminal device 212 of the second subscriber at each point of time of acknowledgement. In the example of Fig. 2, the acknowledgement request is a class 0-type short message the advantage of which is that it is not saved to the SIM card of the mobile station 212. If there are acknowledgement requests received e.g. every fifteen minutes, ordinary short messages would very soon occupy the memory locations of the SIM card. In the example of Fig. 2, the second subscriber responds to the acknowledgement request by sending a short message to a predetermined number 615. In case the second subscriber does not react to the acknowledgement request sent to him, a new acknowledgement request is sent to his/her terminal device 212, e.g. after three minutes have lapsed from the first one. Altogether there are e.g. five acknowledgement requests sent in fifteen minutes. If the second subscriber during this period does not respond to the acknowledgement request, then from the acknowledgement server 230, an alarm is sent to the terminal device 211 of the first subscriber, which in the example of Fig. 2 is a short message the content of which is e.g. of the form: "No acknowledgement received - 040xxxxxx". If the second subscriber answers to the acknowledgment, then from the acknowledgement server 230, an acknowledgement message is sent to the terminal device 211 of the first subscriber, which in the example of Fig. 2 is a short message the content of which is e.g. of the form "Acknowledgement received - 040xxxxxx". When one has gone through all the determined points of time of acknowledgement, the service is finished.

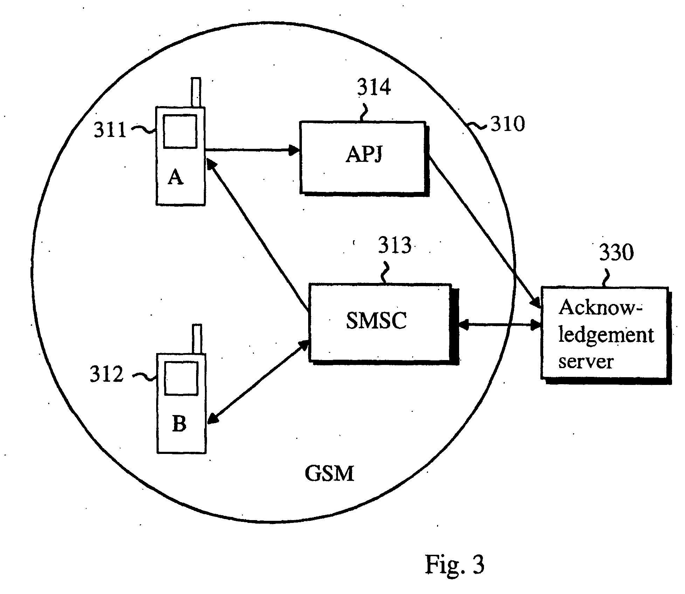

Fig. 3 is a block diagram illustrating, by way of example, the components of one system in accordance with the invention. The system comprises a switched telephone network 310, which in the example of Fig. 3 is a digital mobile network. Arranged in the telephone network in question is a short message service center 313, as well as a terminal device 311 of the first subscriber and a terminal device 312 of the second subscriber. The terminal devices in question are in the example of Fig. 3 mobile stations provided with short message features. According to the invention, the system comprises an acknowledgement server 330. Further, according to the invention, the system comprises a user interface by means of which the first subscriber initiates a connection with the acknowledgement server. In the example of Fig. 3, the user interface comprises the terminal device 311 of the first subscriber as well as an APJ 314, which are communicating with the acknowledgement server 330 via the mobile network 310.

The first subscriber initiates a connection using his/her mobile station 311, by way of the APJ 314, with the acknowledgement server 330 onto which a set of acknowledgement parameters are entered that comprise the subscriber number of the second subscriber, as well as one or more points of time of acknowledgement. In the example there is only one subscriber being monitored (the second subscriber), but naturally there may be more than one of them. Each acknowledgement request may be set as a single-use one or a repeated one, e.g. every day at the same time. As regards the content, the acknowledgement request is divided into a standard message and a part being determined by the first subscriber. The standard message is e.g. of the form "Acknowledgement message: call 16743 or send ok to the number 615". The first subscriber may, at some later point, change the values of the acknowledgement parameters. The acknowledgement parameters are transmitted to the acknowledgement server. It is important to note that although in Fig. 3, the acknowledgement server has been presented as a whole entity, its functions may be alternatively distributed on several units physically separate.

Next, from the acknowledgement server 330, a confirmation request is sent to the terminal device 312 of the second subscriber prior to sending the first acknowledgement request. In the example of Fig. 3, a short message is received onto the mobile station 312 of the second subscriber via the short message service center 313, the content of which is e.g. of the form: "Are you willing to accept an acknowledgement service with the number 040xxxxxx ? Call 16743 or send ok to the number 615 to inform about your consent". In response to the confirmation request concerned, the subscriber sends a confirmation from his/her terminal device 312 to the acknowledgement server 330 via the short message service center 313. Only after this, the acknowledgement service is activated. Alternatively, the second subscriber sends a rejection or leaves the confirmation request unanswered. In that case, the acknowledgement service is not activated.

Next, the acknowledgement service arranged on the acknowledgement server 330 is activated. From the acknowledgement server 330, an acknowledgement request is sent to the terminal device 312 of the second subscriber at each point of time of acknowledgement. In the example of Fig. 3, the acknowledgement request is a class 0-type short message the advantage of which is that it is not saved to the SIM card of the mobile station 312. If there are acknowledgement requests received e.g. every fifteen minutes, ordinary short messages would very soon occupy the memory locations of the SIM card. In the example of Fig. 3, the second subscriber responds to the acknowledgement request by sending a short message to a predetermined number 615. In case the second subscriber does not react to the acknowledgement request sent to him, a new acknowledgement request is sent to his/her terminal device 312, e.g. after three minutes have lapsed from the first one. Altogether there are e.g. five acknowledgement requests sent in fifteen minutes. If the second subscriber during this period does not respond to the acknowledgement request, then from the acknowledgement server 330, an alarm is sent to the terminal device 311 of the first subscriber, which in the example of Fig. 3 is a short message the content of which is e.g. of the form: "No acknowledgement received - 040xxxxxx". If the second subscriber responds to the acknowledgment, then from the acknowledgement server 330, an acknowledgement message is sent to the terminal device 311 of the first subscriber, which in the example of Fig. 3 is a short message the content of which is e.g. of the form "Acknowledgement received - 040xxxxxx". When one has gone through all the determined points of time of acknowledgement, the service is finished.

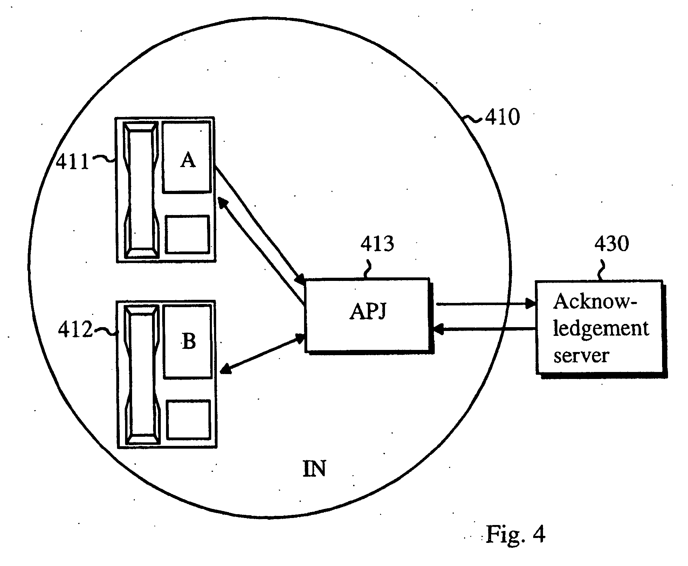

Fig. 4 is a block diagram illustrating, by way of example, the components of one system in accordance with the invention. The system comprises a switched telephone network 410, which in the example of Fig. 4 is a fixed wired network comprising intelligent network facilities. Arranged in the telephone network in question is an APJ 413, as well as a terminal device 411 of the first subscriber and a terminal device 412 of the second subscriber. The terminal devices in question are in the example of Fig. 4 telephones of a fixed network equipped with dual-tone multifrequency dialing. According to the invention, the system comprises an acknowledgement server 430. Further, according to the invention, the system comprises a user interface by means of which the first subscriber may initiate a connection with the acknowledgement server. In the example of Fig. 4, the user interface comprises the terminal device 411 of the first subscriber that is equipped with dual-tone multifrequency dialing, as well as an APJ 413, which are communicating with the acknowledgement server 430 via the telephone network 410.

The first subscriber initiates a connection from his/her terminal device 411 via the APJ 413 with the acknowledgement server 430 onto which a set of acknowledgement parameters are entered that comprise the subscriber number of the second subscriber, as well as one or more points of time of acknowledgement. In the example there is only one subscriber being monitored (the second subscriber), but naturally there may be more than one of them. Each acknowledgement request may be set as a single-use one or a repeated one, e.g. every day at the same time. As regards the content, the acknowledgement request is divided into a standard message and a part being determined by the first subscriber. The standard message is e.g. of the form "Acknowledgement request: call 16743". The first subscriber may, at some later point, change the values of the acknowledgement parameters. The acknowledgement parameters are transmitted to the acknowledgement server. It is important to note that although in Fig. 4, the acknowledgement server has been presented as a whole entity, its functions may be alternatively distributed on several units physically separate.

Next, from the acknowledgement server 430, a confirmation request is sent to the terminal device 412 of the second subscriber prior to sending the first acknowledgement request. In the example of Fig. 4, a call is made to the mobile station 412 of the second subscriber via the APJ 413, the content of which is e.g. of the form: "Are you willing to accept an acknowledgement service with the number 09xxxxxx ? Call 16743 or send ok to the number 615 to inform about your consent". In response to the confirmation request concerned, the second subscriber makes a phone call from his/her terminal device 412 to the given number to confirm. Only after this, the acknowledgement service is activated. Alternatively, the second subscriber leaves the confirmation request unanswered. In that case, the acknowledgement service is not activated.

Next, the acknowledgement service arranged on the acknowledgement server 430 is activated. From the acknowledgement server 430, an acknowledgement request is sent to the terminal device 412 of the second subscriber at each point of time of acknowledgement. In the example of Fig. 4, the acknowledgement request is a phone call made via the APJ 413. In the example of Fig. 4, the second subscriber responds to the acknowledgement request by calling a predetermined number 16743. In case the second subscriber does not react to the acknowledgement request sent to him, a new acknowledgement request is called to his/her terminal device 412, e.g. after three minutes have lapsed from the first one. Altogether there are e.g. five acknowledgement requests called in fifteen minutes. If the second subscriber during this period does not respond to the acknowledgement request, then from the acknowledgement server 430, an alarm is sent to the terminal device 411 of the first subscriber, which in the example of Fig. 4 is a call made via the APJ 413 the content of which is e.g. of the form: "No acknowledgement received". If the second subscriber answers to the acknowledgment request, then from the acknowledgement server 430, an acknowledgement message is sent to the terminal device 411 of the first subscriber, which in the example of Fig. 4 is a phone call made via the APJ 413 the content of which is e.g. of the form "Acknowledgement received". When one has gone through all the determined points of time of acknowledgement, the service is finished.

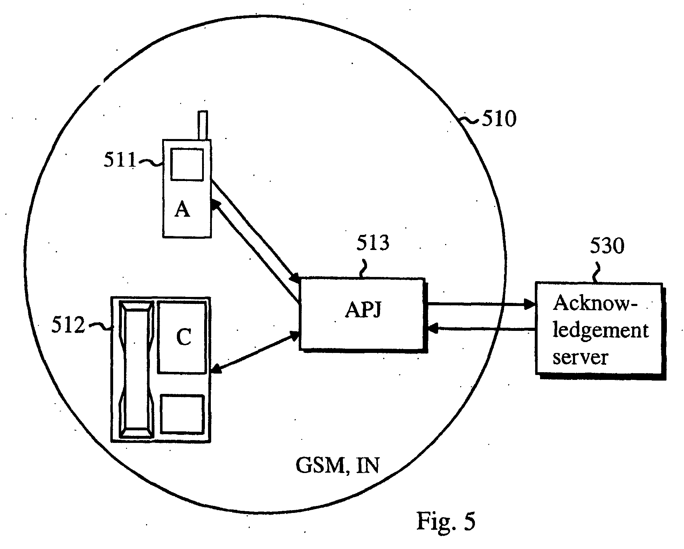

Fig. 5 is a block diagram illustrating, by way of example, the components of one system in accordance with the invention. In the system as shown in Fig. 5, the first subscriber sets himself/herself to be the one being monitored. The possible alarm is sent to a third party determined by the first subscriber. The system as shown in Fig. 5 is suitable for the ensuring of the security of people working alone. The system comprises a switched telephone network 510, which in the example of Fig. 5 comprises a fixed wired network comprising intelligent network facilities, as well as a digital mobile network, which communicate with one another. Arranged in the telephone network in question is an APJ 513, as well as a terminal device 511 of the first subscriber and a terminal device 512 of the third subscriber. In the example of Fig. 5, the terminal devices in question are a mobile station 511 equipped with dual-tone multifrequency dialing and a telephone of a fixed network 512. According to the invention, the system comprises an acknowledgement server 530. Furthermore, according to the invention, the system comprises a user interface by means of which the first subscriber initiates a connection with the acknowledgement server 530. In the example of Fig. 5, the user interface comprises a terminal device 511 of the first subscriber that is equipped with dual-tone multifrequency dialing, as well as an APJ 513, which communicate with the acknowledgement server 530 over the telephone network 510.

The first subscriber initiates a connection from his/her terminal device 511 via the APJ 513 with the acknowledgement server 530 onto which a set of acknowledgement parameters are entered that comprise the subscriber number of the third subscriber, as well as one or more points of time of acknowledgement. In the example, the subscriber being monitored is thus the first subscriber himself/herself. The responsibility of the third subscriber is to receive the possible alarm. Each acknowledgement request may be set as a single-use one or a repeated one, e.g. once in an hour. The first subscriber may also, at same later point, change the values of the acknowledgement parameters. Further, in conjunction with the introduction of the acknowledgement service, the first subscriber has the possibility of dictating the message desired by him or her via the APJ to the service. The message to be dictated comprises e.g. at least the location information of the first subscriber: " I am now here in Halla-aho near the track fixing the lines". In conjunction with the possible alarm, also this dictated message is transmitted further to the third subscriber. The acknowledgement parameters are transmitted to the acknowledgement server. It is important to note that although in Fig. 5 the acknowledgement server has been presented as a whole entity, its functions may be alternatively distributed on several units physically separate.

Next, the acknowledgement service arranged on the acknowledgement server 530 is activated. From the acknowledgement server 530, an acknowledgement request is sent to the terminal device 511 of the first subscriber at each point of time of acknowledgement. In the example of Fig. 5, the acknowledgement request is a phone call made via the APJ 513. In the example of Fig. 5, the first subscriber responds to the acknowledgement request by calling a predetermined number 16743. In case the second subscriber does not react to the acknowledgement request sent to him, a new acknowledgement request is called to his/her terminal device 511, e.g. after three minutes have lapsed from the first one. Altogether there are e.g. five acknowledgement requests called in fifteen minutes. Further, in conjunction with the acknowledgement it is possible to ask the first subscriber for a predetermined code which prevents other persons from acknowledging for him/her. The code in question has been set e.g. in conjunction with the entry of the acknowledgement parameters. If the subscriber during this period does not respond to the acknowledgement request, then from the acknowledgement server 530, an alarm is sent to the terminal device 512 of the third subscriber, which in the example of Fig. 5 is a call made via the APJ 513 the content of which is e.g. of the form: "No acknowledgement received" - 040xxxxxx". When one has gone through all the determined points of time of acknowledgement, the service is finished.

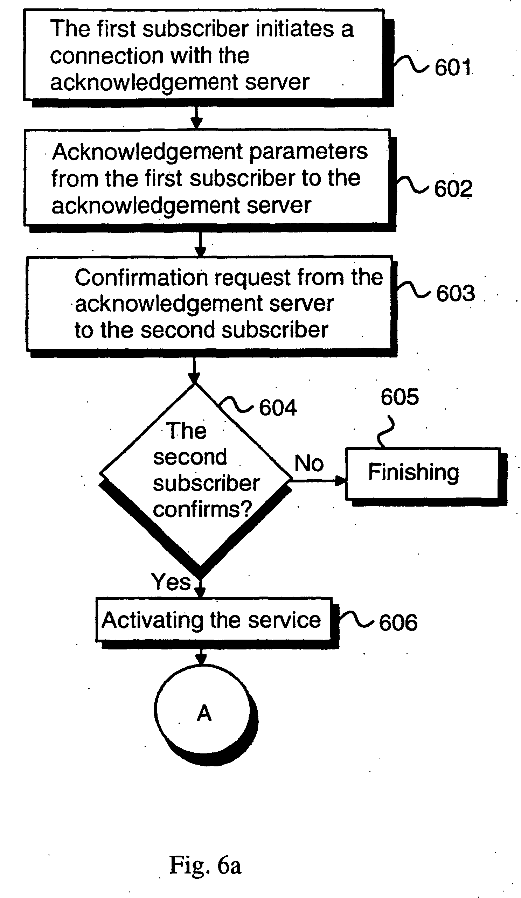

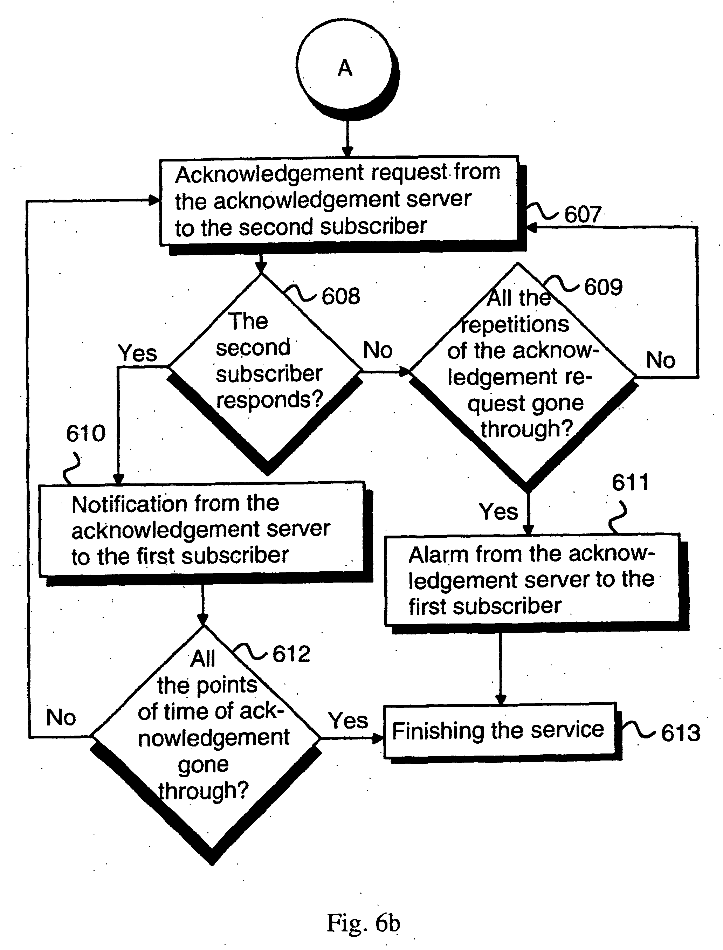

Fig. 6 is a flow diagram illustrating, by way of example, one system in accordance with the invention for providing an acknowledgement service to subscribers of a switched telephone network. At step 601, the first subscriber initiates a connection with the acknowledgement server. At step 602, the first subscriber sends a set of predetermined acknowledgement parameters to the acknowledgement server in question that comprise the subscriber number of the second subscriber as well as one or more points of time of acknowledgement. Next, at step 603, from the acknowledgement server, a confirmation request is sent to the terminal device of the second subscriber. In response to the confirmation request in question, the second subscriber sends a confirmation from his/her terminal device to the acknowledgement server, step 604. After this, the acknowledgement service is activated, step 606. Alternatively, the second subscriber may leave the confirmation request unanswered. In that case, the acknowledgement service is not activated, step 605.

When the first point of time of acknowledgement is approaching, a confirmation request is sent to the terminal device of the second subscriber, step 607. At step 608, one waits for the acknowledgement of the second subscriber. If the second subscriber responds to the acknowledgement request by sending an acknowledgment from his/her terminal device to the acknowledgment server, then from the acknowledgement server, an acknowledgement message is sent to the terminal device of the first subscriber, step 610. Next, it is checked whether one has gone through all the points of time of acknowledgement, step 612. The acknowledgement request may be set as a single-use one or a repeated one, e.g. every day at the same time. If there are points of time of acknowledgement still left, then while the next point of time of acknowledgement is approaching, an acknowledgement request it sent from the acknowledgment server to the terminal device of the second subscriber, step 607. If in turn one has gone through all the points of time of acknowledgement, the service is finished, step 613.

If at step 606 the second subscriber does not respond to the acknowledgement request, it is checked whether the acknowledgement request has already been repeated a predetermined number of times. The acknowledgement request may be sent e.g. five times in fifteen minutes at intervals of three minutes. In case one has not gone through all the repetitions, the acknowledgement request is re-sent, step 607. In case one has gone through all the repetitions and no acknowledgement has been received, an alarm is sent from the acknowledgement server to the terminal device of the first subscriber, step 611, and the service is finished, step 613.

The invention is not restricted merely to the examples of its embodiments referred to above, instead many variations are possible within the scope of the inventive idea defined by the claims.

## Claims

1. A method for providing an acknowledgement service to subscribers of a switched telephone network,
**characterized in that** the method comprises the steps of:
initiating a connection with an acknowledgement server (601),
sending one or more acknowledgement parameters to the acknowledgement server in question (602),
sending a confirmation request from the acknowledgement server to the terminal device of at least one second subscriber prior to sending the first acknowledgement request (603),
sending an acknowledgement request from the acknowledgement server to the terminal device of a second subscriber at each point of time of acknowledgement defined by the acknowledgement parameters (607),
sending an alarm to at least one terminal device and/or monitoring system of a first subscriber, in case at least one second subscriber does not respond to the acknowledgement request (611), and
the at least one second subscriber concerned sends or does not send a confirmation from his/her terminal device to the acknowledgement server in response to the confirmation request in question (604).

2. The method according to claim 1, **characterized in that** the aforementioned acknowledgement parameters comprise the subscriber number of at least one second subscriber as well as one or more points of time of acknowledgement.

3. The method according to claim 1 or 2, **characterized in that** the method further comprises the step of:
sending an acknowledgement message to the terminal device of at least one first subscriber, if at least one second subscriber responds to the acknowledgement request.

4. The method according to claim 1, 2 or 3, **characterized in that** the method further comprises the step of:
sending the aforementioned acknowledgement request to the terminal device of at least one second subscriber a predetermined number of times at predetermined intervals, until either the at least one second subscriber concerned responds, or a predetermined response time expires.

5. The method according to claim 1, 2, 3, or 4, **characterized in that**:
the aforementioned acknowledgement requests are sent to the terminal device of the first subscriber instead of the terminal device of the second subscriber,
the first subscriber responds or does not respond to the acknowledgement requests in question instead of the second subscriber, and
the aforementioned alarm is sent to the terminal device of a predetermined third subscriber instead of the terminal device of the first subscriber.

6. The method according to claim 1, 2, 3, 4 or 5, **characterized in that** the method further comprises the step of:
initiating a connection with the acknowledgement server and sending the aforementioned parameters to it by the first subscriber.

7. The method according to claim 1, 2, 3, 4, 5, or 6, **characterized in that** the method further comprises the step of:
initiating a connection with the acknowledgement server and sending the aforementioned acknowledgement parameters using one of the following user interfaces: interactive browser based user interface or interactive voice response user interface.

8. The method according to claim 1, 2, 3, 4, 5, 6, or 7, **characterized in that** the method further comprises the step of:
sending the aforementioned acknowledgement requests, responses to the acknowledgement requests, acknowledgement messages, alarms, confirmation requests and/or confirmations as short messages.

9. The method according to claim 8, **characterized in that** the method further comprises the step of:
sending the acknowledgement request as short messages that are received directly onto the display of a mobile station.

10. The method according to claim 1, 2, 3, 4, 5, 6, 7, 8, or 9, **characterized in that** the method further comprises the step of:
sending the aforementioned acknowledgement requests, responses to the acknowledgement requests, acknowledgement messages, alarms, confirmation requests and/or confirmations using an interactive voice response.

11. The method according to claim 1, 2, 3, 4, 5, 6, 7, 8, 9, or 10, **characterized in that** the acknowledgement request comprises a predetermined standard part and a subscriber part being determined by the first subscriber.

12. A system for providing an acknowledgement service to subscribers of a switched telephone network, which system comprises:
a switched telephone network (110) for transmitting acknowledgements,
at least one terminal device (111) and/or monitoring system of a first subscriber for monitoring the acknowledgements, which at least one terminal device and/or monitoring system of the first subscriber has been arranged in conjunction with the aforementioned telephone network, and
at least one terminal device (112) of a second subscriber for sending the acknowledgements, which at least one terminal device of the second subscriber has been arranged in conjunction with the aforementioned telephone network,
**characterized in that** the system further comprises:
a user interface (121, 122) for initiating the connection and for sending the acknowledgement parameters to the acknowledgement server (130), and
an acknowledgement server (130) for sending the acknowledgement request to the terminal device of at least one second subscriber at a point of time defined by the acknowledgement parameters; and for sending an alarm to at least one terminal device and/or monitoring system of the first subscriber, in case at least one second subscriber does not respond to the acknowledgement request, wherein
the aforementioned acknowledgement server (130) is arranged to send a confirmation request to the terminal device of at least one second subscriber prior to sending the first acknowledgement request; and to receive a confirmation from the terminal device in question in response to the confirmation request in question.

13. The system according to claim 12, **characterized in that** the aforementioned acknowledgement parameters comprise the subscriber number of at least one second subscriber as well as one or more points of time of acknowledgement.

14. The system according to claim 12 or 13, **characterized in that** the aforementioned acknowledgement server (130) is arranged to send an acknowledgement message to the terminal device and/or monitoring system of at least one first subscriber, in case at least one second subscriber responds to the acknowledgement request.

15. The system according to claim 12, 13, or 14, **characterized in that** the aforementioned acknowledgement server (130) is arranged to send the aforementioned acknowledgement request to the terminal device of at least one second subscriber a predetermined number of times at predetermined intervals, until either the second subscriber concerned responds, or a predetermined response time expires.

16. The system according to claim 12, 13, 14, or 15, **characterized in that** the aforementioned terminal device (511) of the first subscriber is arranged to receive the aforementioned acknowledgement requests instead of the terminal device of the second subscriber, and to respond or not to respond to the aforementioned acknowledgement requests instead of the second subscriber; and that the system further comprises a terminal device (512) of a third subscriber for receiving the aforementioned alarm instead of the terminal device of the first subscriber.

17. The system according to claim 12, 13, 14, 15, or 16, **characterized in that** the system further comprises:
a computer (122) of at least one first subscriber for initiating a connection and for sending the acknowledgement parameters to the acknowledgement server, and
a world wide web server (121) for transmitting the acknowledgement parameters to the acknowledgement server, which world wide web server is arranged in conjunction with the acknowledgement server and the computer of the first subscriber.

18. The system according to claim 12, 13, 14, 15, or 16, **characterized in that** the system further comprises:
a terminal device (211) of at least one first subscriber for transmitting the acknowledgement parameters to the acknowledgement server, which terminal device is a digital mobile station provided with wireless application protocol facilities, and
a wireless application protocol gateway (214) for transmitting the acknowledgement parameters to the acknowledgement server, which wireless application protocol gateway is arranged in conjunction with the acknowledgement server and the terminal device of the first subscriber.

19. The system according to claim 12, 13, 14, 15, or 16, **characterized in that** the system further comprises:
a terminal device (311) of at least one first subscriber for transmitting the acknowledgement parameters to the acknowledgement server, and
an interactive voice response service (314) for transmitting the acknowledgement parameters to the acknowledgement server, which interactive voice response service is arranged in conjunction with the acknowledgement server and the terminal device of the first subscriber.

20. The system according to claim 12, 13, 14, 15, 16, 17, 18, or 19, **characterized in that** the system further comprises:
a short message service center (113) as well as terminal devices (111,112) provided with short message facilities for sending the aforementioned acknowledgement requests, responses to the acknowledgement requests, acknowledgement messages, alarms, confirmation requests and/or confirmations as short messages.

21. The system according to claim 20, **characterized in that** the aforementioned short message service center (113) as well as the terminal devices (111, 112) provided with short message facilities are arranged to send the aforementioned acknowledgement requests as short messages that are received directly onto the display of a mobile station.

22. The system according to claim 12, 13, 14, 15, 16, 17, 18, 19, 20, or 21, **characterized in that** the system further comprises:
an APJ interactive voice response service (413) as well as terminal devices (411,412) for sending the aforementioned acknowledgement requests, responses to the acknowledgement requests, acknowledgement messages, alarms, confirmation requests and/or confirmations using the interactive voice response functionality.

23. The system according to claim 12, 13, 14, 15, 16, 17, 18, 19, 20, 21, or 22, **characterized in that** the acknowledgement request comprises a predetermined standard part and a subscriber part being determined by the first subscriber.

## Patentansprüche

1. Verfahren zum Bereitstellen eines Bestätigungsdienstes für Teilnehmer eines Koppeltelefonnetzes,
**dadurch gekennzeichnet,**
**dass** das Verfahren die Schritte aufweist:
Initiieren einer verbindung mit einem Bestätigungsserver (601),
Senden eines oder mehrerer Bestätigungsparameter zu dem fraglichen Bestätigungsserver (602),
Senden einer Rückmeldungsanfrage von dem Bestätigungsserver zu dem Endgerät zumindest eines zweiten Teilnehmers vor dem Senden der ersten Bestätigungsanfrage (603),
Senden einer Bestätigungsanfrage von dem Bestätigungsserver zu dem Endgerät eines zweiten Teilnehmers zu jedem Zeitpunkt der Bestätigung, welche durch die Bestätigungsparameter definiert sind (607),
Senden eines Alarms zu wenigstens einem Endgerät und/oder einem Überwachungssystem eines ersten Teilnehmers, falls der wenigstens eine zweite Teilnehmer auf die Bestätigungsanfrage nicht antwortet (611), und der wenigstens eine beteiligte zweite Teilnehmer eine Rückmeldung von seinem Endgerät (E) zu dem Bestätigungsserver als Antwort auf die fragliche Rückmeldungsanfrage (604) sendet oder nicht sendet.

2. Verfahren nach Anspruch 1,
**dadurch gekennzeichnet,**
**dass** die oben erwähnten Bestätigungsparameter die Teilnehmernummer von wenigstens einem zweiten Teilnehmer und eine oder mehrere Zeitpunkte der Bestätigung aufweisen.

3. Verfahren nach Anspruch 1 oder 2,
**dadurch gekennzeichnet,**
**dass** das Verfahren weiter den Schritt aufweist:
Senden einer Bestätigungsnachricht zu dem Endgerät des wenigstens einen ersten Teilnehmers, falls der wenigstens eine zweite Teilnehmer auf die Bestätigungsanfrage antwortet.

4. Verfahren nach Anspruch 1, 2 oder 3,
**dadurch gekennzeichnet,**
**dass** das Verfahren weiter den Schritt aufweist:
Senden der oben erwähnten Bestätigungsanfrage zu dem Endgerät des wenigstens einen zweiten Teilnehmers an einer vorbestimmten Anzahl von Zeitpunkten für vorbestimmte Intervalle, bis entweder der zumindest eine zweite beteiligte Teilnehmer antwortet oder eine vorbestimmte Antwortzeit abläuft.

5. Verfahren nach Anspruch 1, 2, 3 oder 4,
**dadurch gekennzeichnet,**
**dass** die oben erwähnten Bestätigungsanfragen zu dem Endgerät des ersten Teilnehmers anstelle zu dem Endgerät des zweiten Teilnehmers gesendet werden,
der erste Teilnehmer auf die fraglichen Bestätigungsanfragen anstatt des zweiten Teilnehmers antwortet oder nicht antwortet, und
der oben erwähnte Alarm zu dem Endgerät eines vorbestimmten dritten Teilnehmers anstelle zu dem Endgerät des ersten Teilnehmers gesendet wird.

6. Verfahren nach Anspruch 1, 2, 3, 4 oder 5,
**dadurch gekennzeichnet,**
**dass** das Verfahren weiter den Schritt aufweist:
Initiieren einer Verbindung mit dem Bestätigungsserver, und
Senden der oben erwähnten Parameter zu diesem durch den ersten Teilnehmer.

7. Verfahren nach Anspruch 1, 2, 3, 4, 5 oder 6,
**dadurch gekennzeichnet,**
**dass** das Verfahren weiter den Schritt aufweist:
Initiieren einer Verbindung mit dem Bestätigungsserver und Senden der oben erwähnten Bestätigungsparameter mittels Verwenden einer der folgenden Nutzerschnittstellen:
interaktive Browser-basierte Nutzerschnittstelle oder interaktive Sprachausgabeschnittstelle.

8. Verfahren nach Anspruch 1, 2, 3, 4, 5, 6 oder 7,
**dadurch gekennzeichnet,**
**dass** das Verfahren weiter den Schritt aufweist:
Senden der oben erwähnten Bestätigungsanfragen, Antworten auf die Bestätigungsanfragen, Bestätigungsnachrichten, Alarme, Rückmeldungsanfragen und/oder Rückmeldungen als Kurznachrichten.

9. Verfahren nach Anspruch 8,
**dadurch gekennzeichnet,**
**dass** das Verfahren weiter den Schritt aufweist:
Senden der Bestätigungsanfragen als Kurznachrichten, die direkt auf dem Display eines Mobilfunkendgerätes empfangen werden.

10. Verfahren nach Anspruch 1, 2, 3, 4, 5, 6, 7, 8 oder 9,
**dadurch gekennzeichnet,**
**dass** das Verfahren weiter den Schritt aufweist:
Senden der oben erwähnten Bestätigungsanfragen, Antworten auf die Bestätigungsanfragen, Bestätigungsnachrichten, Alarme, Rückmeldungsanfragen und/oder Rückmeldungen unter Verwendung einer interaktiven Sprachausgabe.

11. Verfahren nach Anspruch 1, 2, 3, 4, 5, 6, 7, 8, 9 oder 10,
**dadurch gekennzeichnet,**
**dass** die Bestätigungsanfrage einen vorbestimmten Standardteil und einen Teilnehmerteil, welcher durch den ersten Teilnehmer bestimmt wird, aufweist.

12. System zum Bereitstellen eines Bestätigungsdienstes für Teilnehmer eines Koppeltelefonnetzes, welches aufweist:
ein Koppeltelefonnetz (110) zur Übermittlung von Bestätigungen,
wenigstens ein Endgerät (111) und/oder Überwachungssystem eines ersten Teilnehmers zum Überwachen der Bestätigungen, wobei das wenigstens eine Teilnehmerendgerät und/oder Überwachungssystem des ersten Teilnehmers in Verbindung mit dem oben genannten Telefonnetzwerk angeordnet ist, und
wenigstens ein Endgerät (112) eines zweiten Teilnehmers zum Senden der Bestätigungen, wobei das wenigstens eine Endgerät des zweiten Teilnehmers in Verbindung mit dem oben genannten Telefonnetzwerk angeordnet ist,
**dadurch gekennzeichnet, dass** das System weiter aufweist:
eine Nutzerschnittstelle (121, 122) zum Initiieren der Verbindung und zum Senden der Bestätigungsparameter zum dem Bestätigungsserver (130), und
ein Bestätigungsserver (130) zum Senden der Bestätigungsanfrage zu dem Endgerät des wenigstens einen zweiten Teilnehmers zu einem Zeitpunkt, der durch die Bestätigungsparameter definiert ist; und zum Senden eines Alarms an wenigstens ein Endgerät und/oder Überwachungssystem des ersten Teilnehmers falls wenigstens ein zweiter Teilnehmer nicht auf die Bestätigungsanfrage antwortet, wobei
der oben erwähnte Bestätigungsserver (130) angeordnet ist, um eine Rückmeldungsanfrage zu dem Endgerät des wenigstens einen zweiten Teilnehmers vor dem Senden der ersten Bestätigungsanfrage zu senden; und um eine Rückmeldung von dem fraglichen Endgerät als Antwort auf die fragliche Rückmeldungsanfrage zu empfangen.

13. System nach Anspruch 12,
**dadurch gekennzeichnet,**
**dass** die oben erwähnten Bestätigungsparameter eine Teilnehmernummer wenigstens eines zweiten Teilnehmers und einen oder mehrere Zeitpunkte der Bestätigung aufweist.

14. System nach Anspruch 12 oder 13,
**dadurch gekennzeichnet,**
**dass** der oben erwähnte Bestätigungsserver (130) angeordnet ist, um eine Bestätigungsnachricht zu dem Endgerät und/oder Überwachungssystem des wenigstens eines ersten Teilnehmers zu senden, falls wenigstens ein zweiter Teilnehmer auf die Bestätigungsanfrage antwortet.

15. System nach Anspruch 12, 13 oder 14,
**dadurch gekennzeichnet,**
**dass** der oben erwähnte Bestätigungsserver (130) angeordnet ist, um die oben erwähnte Bestätigungsanfrage zu dem Endgerät des wenigstens einen zweiten Teilnehmers an einer vorbestimmten Anzahl von Zeitpunkten für vorbestimmte Intervalle zu senden, bis entweder der betroffene zweite Teilnehmer antwortet oder eine vorbestimmte Antwortzeit abläuft.

16. System nach Anspruch 12, 13, 14 oder 15,
**dadurch gekennzeichnet,**
**dass** das oben erwähnte Endgerät (511) des ersten Teilnehmers angeordnet ist, um die oben erwähnten Bestätigungsanfragen anstelle des Endgerätes des zweiten Teilnehmers zu empfangen und um auf die oben erwähnten Bestätigungsanfragen anstelle des zweiten Teilnehmers zu antworten oder nicht zu antworten; und dass das System weiter ein Endgerät (512) eines dritten Teilnehmers zum Empfangen des oben erwähnten Alarms anstelle des Endgeräts des ersten Teilnehmers aufweist.

17. System nach Anspruch 12, 13, 14, 15 oder 16,
**dadurch gekennzeichnet,**
**dass** das System weiter aufweist:
einen Computer (122) wenigstens eines ersten Teilnehmers zum Initiieren einer Verbindung und zum Senden der Bestätigungsparameter zu dem oben erwähnten Bestätigungsserver, und
einen World-Wide-Web-Server (121) zum Übertragen der Bestätigungsparameter zu dem Bestätigungsserver, wobei der World-Wide-Web-Server in Verbindung mit dem Bestätigungsserver und dem Computer des ersten Teilnehmers angeordnet ist.

18. System nach Anspruch 12, 13, 14, 15 oder 16,
**dadurch gekennzeichnet,**
**dass** das System weiter aufweist:
ein Endgerät (211) wenigstens eines ersten Teilnehmers zum Übertragen der Bestätigungsparameter zu dem Bestätigungsserver, wobei das Endgerät ein digitales Mobilfunkendgerät mit drahtlosen Anwendungsprotokolleinrichtungen ist, und
einen drahtlosen Anwendungsprotokollnetzübergang (214) zum Übertragen der Bestätigungsparameter zu dem Bestätigungsserver, wobei der drahtlose Anwendungsprotokollnetzübergang in Verbindung mit dem Bestätigungsserver und dem Endgerät des ersten Teilnehmers angeordnet ist.

19. System nach Anspruch 12, 13, 14, 15 oder 16,
**dadurch gekennzeichnet,**
**dass** das System weiter aufweist:
ein Endgerät (311) wenigstens eines ersten Teilnehmers zum Übertragen der Bestätigungsparameter zu dem Bestätigungsserver, und
einen interaktiven Sprachausgabedienst (314) zum Übertragen der Bestätigungsparameter zu dem Bestätigungsserver, wobei der interaktive Sprachausgabedienst in Verbindung mit dem Bestätigungsserver und dem Endgerät des ersten Teilnehmers angeordnet ist.

20. System nach Anspruch 12, 13, 14, 15, 16, 17, 18 oder 19,
**dadurch gekennzeichnet,**
**dass** das System weiter aufweist:
eine Kurznachrichtendienstzentrale (113) und Endgeräte (111, 112) ausgerüstet mit Kurznachrichteneinrichtungen zum Senden der oben erwähnten Bestätigungsanfragen, Antworten auf die Bestätigungsanfragen, Bestätigungsnachrichten, Alarme, Rückmeldungsanfragen und/oder Rückmeldungen als Kurznachrichten.

21. System nach Anspruch 20,
**dadurch gekennzeichnet,**
**dass** die oben erwähnte Kurznachrichtendienstzentrale (113) und die Endgeräte (111, 112) ausgerüstet mit Kurznachrichteneinrichtungen zum Senden der oben erwähnten Bestätigungsanfragen als Kurznachrichten, welche direkt auf dem Display eines Mobilfunkendgerätes empfangen werden, angeordnet sind.

22. System nach Anspruch 12, 13, 14, 15, 16, 17, 18, 19, 20 oder 21,
**dadurch gekennzeichnet,**
**dass** das System weiter aufweist:
einen APJ-interaktiven Sprachausgabedienst (413) und Endgeräte (411, 412) zum Senden der oben erwähnten Bestätigungsanfragen, Antworten auf die Bestätigungsanfragen, Bestätigungsnachrichten, Alarme, Rückmeldungsanfragen und/oder Rückmeldungen unter Verwendung der interaktiven Sprachausgabefunktionalität.

23. System nach Anspruch 12, 13, 14, 15, 16, 17, 18, 19, 20, 21 oder 22,
**dadurch gekennzeichnet,**
**dass** die Bestätigungsanfrage einen vorbestimmten Standardteil und eine Teilnehmerteil, welcher durch den ersten Teilnehmer definiert wird, aufweist.

## Revendications

1. Procédé fournissant un service d'accusé de réception aux abonnés d'un réseau téléphonique commuté,
**caractérisé en ce que** le procédé comporte les étapes consistant à:
lancer une connexion avec un service d'accusé de réception (601),
envoyer un ou plusieurs paramètres d'accusé de réception au serveur d'accusé de réception en question, (602),
envoyer une demande de confirmation du serveur d'accusé de réception au terminal au moins d'un deuxième abonné avant d'envoyer la première demande d'accusé de réception (603),
envoyer une demande d'accusé de réception du serveur d'accusé de réception au terminal d'un deuxième abonné à chaque instant d'accusé de réception défini par les paramètres d'accusé de réception (607),
envoyer une alarme au moins à un système de dispositif et/ou de surveillance de terminal d'un premier abonné, au cas où au moins un second abonné ne répondrait pas à la demande d'accusé de réception (611), et
alors qu'au moins un second abonné concerné envoie ou n'envoie pas une confirmation de son terminal au serveur d'accusé de réception à la demande de confirmation en question (604).

2. Procédé selon la revendication 1, **caractérisé en ce que** les paramètres mentionnés ci-dessus d'accusé de réception comportent le numéro d'abonné d'au moins un second abonné ainsi qu'un ou plusieurs moments d'accusé de réception.

3. Procédé selon la revendication 1 ou 2, **caractérisé en ce que** le procédé comporte en outre l'étape consistant à :
envoyer un message d'accusé de réception au terminal au moins d'un premier abonné, si au moins un second abonné répond à la demande d'accusé de réception.

4. Procédé selon la revendication 1, 2 ou 3, **caractérisé en ce que** le procédé comprend en outre l'étape consistant à:
envoyer la demande d'accusé de réception mentionnée ci-dessus au terminal au moins à un second abonné d'un nombre de fois prédéterminé à intervalles prédéterminés, jusqu'à ce que au moins un second abonné concerné réponde, ou qu'un temps de réponse prédéterminé s'écoule.

5. Procédé selon la revendication 1, 2, 3, ou 4, **caractérisé en ce que** :
les demandes d'accusé de réception mentionnées ci-dessus sont envoyées au terminal du premier abonné au lieu du terminal du deuxième abonné,
le premier abonné répond ou ne répond pas aux demandes d'accusé de réception en question à la place du deuxième abonné, et
l'alarme mentionnée ci-dessus est envoyée au terminal d'un troisième abonné prédéterminé à la place du terminal du premier abonné.

6. Procédé selon la revendication 1, 2, 3, 4 ou 5, **caractérisé en ce que** le procédé comporte en outre l'étape consistant à:
lancer une connexion avec le serveur d'accusé de réception et envoyer les paramètres mentionnés ci-dessus par le premier abonné.

7. Procédé selon la revendication 1, 2, 3, 4, 5, ou 6, **caractérisé en ce que** le procédé comporte en outre l'étape consistant à:
lancer une connexion avec le serveur et envoyer les paramètres d'accusé de réception mentionnés ci-dessus en utilisant une des interfaces utilisateur suivantes : le navigateur interactif basé sur l'interface utilisateur ou la réponse vocale interactive de l'interface utilisateur.

8. Procédé selon la revendication 1, 2, 3, 4, 5, 6, ou 7, **caractérisé en ce que** le procédé comporte en outre l'étape consistant à:
envoyer des demandes d'accusé de réception mentionnées ci-dessus, des réponses aux demandes d'accusé de réception, des messages d'accusé de réception, des alarmes, des demandes de confirmation et/ou des confirmations en tant que messages courts.

9. Procédé selon la revendication 8, **caractérisé en ce que** le procédé comporte en outre l'étape consistant à:
envoyer la demande d'accusé de réception en tant que messages courts qui sont reçus directement sur l'affichage d'une station mobile.

10. Procédé selon la revendication 1, 2, 3, 4, 5, 6, 7, 8, ou 9, **caractérisé en ce que** le procédé comporte en outre l'étape consistant à:
envoyer les demandes d'accusé de réception mentionnées ci-dessus, les réponses aux demandes d'accusé de réception, les messages d'accusé de réception, alarmes, les demandes de confirmation et/ou les confirmations utilisant une réponse vocale interactive.

11. Procédé selon la revendication 1, 2, 3, 4, 5, 6, 7, 8, 9, ou 10, **caractérisé en ce que** la demande d'accusé de réception comporte une partie standard prédéterminée et une partie dépendant de l'abonné déterminée par le premier abonné.

12. Système fournissant un service d'accusé de réception aux abonnés d'un réseau téléphonique commuté, lequel système comprend :
un réseau téléphonique commuté (110) pour transmettre des accusés de réception,
au moins un terminal (111) et/ou un système de surveillance d'un premier abonné pour surveiller les accusés de réception, dans au moins un terminal et/ou un système de surveillance du premier abonné qui a été disposé en même temps que le réseau téléphonique mentionné ci-dessus, et
au moins un terminal (112) d'un deuxième abonné pour envoyer les accusés de réception, au moins un terminal du deuxième abonné ayant été disposé en même temps que le réseau téléphonique mentionné ci-dessus,
**caractérisé en ce que** le système comporte en outre :
une interface utilisateur (121, 122) lançant la connexion et pour envoyer les paramètres d'accusé de réception au serveur d'accusé de réception (130), et
un serveur d'accusé de réception (130) envoyant la demande d'accusé de réception au terminal au moins à un second abonné à un instant défini par les paramètres d'accusé de réception ; et envoyant une alarme au moins à un terminal et/ou un système de surveillance du premier abonné, au cas où au moins un second abonné ne répondrait pas à la demande d'accusé de réception, où
le serveur mentionné ci-dessus d'accusé de réception (130) est prévu pour envoyer une demande de confirmation au terminal d'au moins un second abonné avant d'envoyer la première demande d'accusé de réception ; et pour recevoir une confirmation du terminal en question en réponse à la demande de confirmation en question.

13. Système selon la revendication 12, **caractérisé en ce que** les paramètres mentionnés ci-dessus d'accusé de réception comportent le numéro d'abonné au moins d'un second abonné aussi bien qu'un ou plusieurs instants d'accusé de réception.

14. Système selon la revendication 12 ou 13, **caractérisé en ce que** le serveur mentionné ci-dessus d'accusé de réception (130) est prévu pour envoyer un message d'accusé de réception au terminal et/ou au système de surveillance d'au moins du premier abonné, au cas où au moins un second abonné réponde à la demande d'accusé de réception.

15. Système selon la revendication 12, 13, ou 14, **caractérisé en ce que** le serveur mentionné ci-dessus d'accusé de réception (130) est prévu pour envoyer la demande d'accusé de réception mentionnée ci-dessus au terminal au moins à un second abonné un nombre de fois prédéterminé à intervalles prédéterminés, jusqu'à ce que le deuxième abonné concerné réponde, ou qu'un temps de réponse prédéterminé s'écoule.

16. Système selon la revendication 12, 13, 14, ou 15, **caractérisé en ce que** le terminal (511) mentionné ci-dessus du premier abonné est prévu pour recevoir les demandes d'accusé de réception mentionnées ci-dessus au lieu du terminal du deuxième abonné, et pour répondre ou pour ne pas répondre aux demandes d'accusé de réception mentionnées ci-dessus au lieu du deuxième abonné ; et que le système comporte en outre un terminal (512) d'un troisième abonné pour recevoir l'alarme mentionnée ci-dessus au lieu du terminal du premier abonné.

17. Système selon la revendication 12, 13, 14, 15, ou 16, **caractérisé en ce que** le système comporte en outre :
un ordinateur (122) au moins d'un premier abonné pour lancer une connexion et pour envoyer les paramètres d'accusé de réception au serveur d'accusé de réception, et
un serveur Internet (121) pour transmettre les paramètres d'accusé de réception au serveur d'accusé de réception, que le serveur Internet est conçu en accord avec le serveur d'accusé de réception et l'ordinateur du premier abonné.

18. Système selon la revendication 12, 13, 14, 15, ou 16, **caractérisé en ce que** le système comporte en outre :
un terminal (211) au moins d'un premier abonné pour transmettre les paramètres d'accusé de réception au serveur d'accusé de réception, ce terminal étant une station mobile numérique ayant des installations utilisant des protocoles d'applications sans fil,
une passerelle de protocole d'application sans fil (214) pour transmettre les paramètres d'accusé de réception au serveur d'accusé de réception, cette passerelle de protocole d'application sans fil étant prévue en accord avec le serveur d'accusé de réception et le terminal du premier abonné.

19. Système selon la revendication 12, 13, 14, 15, ou 16, **caractérisé en ce que** le système comporte en outre :
un terminal (311) au moins d'un premier abonné pour transmettre les paramètres d'accusé de réception au serveur d'accusé de réception, et
un service interactif de réponse vocale (314) pour transmettre les paramètres d'accusé de réception au serveur d'accusé de réception, que le service interactif de réponse vocale est prévu en même temps que le serveur d'accusé de réception et le terminal du premier abonné.

20. Système selon la revendication 12, 13, 14, 15, 16, 17, 18, ou 19, **caractérisé en ce que** le système comporte en outre :
un centre de messages courts (113) aussi bien que les dispositifs de terminal (111,112) équipés d'installations de messages courts pour envoyer les demandes d'accusé de réception mentionnées ci-dessus, des réponses aux demandes d'accusé de réception, des messages d'accusé de réception, des alarmes, des demandes de confirmation et/ou des confirmations en tant que messages courts.

21. Système selon la revendication 20, **caractérisé en ce que** le centre de messages courts mentionné ci-dessus (113) ainsi que les terminaux (111, 112) équipés d'installations de messages courts sont chargés d'envoyer les demandes d'accusé de réception mentionnées ci-dessus en tant que messages courts qui sont reçus directement sur l'affichage d'une station mobile.

22. Système selon la revendication 12, 13, 14, 15, 16, 17, 18, 19, 20, ou 21, **caractérisé en ce que** le système comporte en outre :
un service interactif de réponse vocale APJ (413) aussi que les terminaux (411, 412) pour envoyer les demandes d'accusé de réception mentionnées ci-dessus, des réponses aux demandes d'accusé de réception, des messages d'accusé de réception, des alarmes, des demandes de confirmation et/ou des confirmations en utilisant la fonctionnalité de réponse vocale interactive.

23. Système selon la revendication 12, 13, 14, 15, 16, 17, 18, 19, 20, 21, ou 22, **caractérisé en ce que** la demande d'accusé de réception comporte une partie standard prédéterminée et une partie dépendante de l'abonné déterminée par le premier abonné.
